# EUROPEAN PATENT SPECIFICATION

(11) **EP 1 067 776 B1**
(45) Date of publication and mention of the grant of the patent: **07.11.2007**
(21) Application number: 00304892.3
(22) Date of filing: 09.06.2000
(51) Int. Cl.: H04N 5/20, H04N 5/232

(54) **Image display apparatus for fixing luminance of blank area and varying only luminance of image.**
Bildanzeigegerät wobei die Luminanz in einem leeren Gebiet festgehalten wird, und nur die Luminanz im Bildbereich modifizierbar ist
Dispositif d'affichage d'images auprès duquel la luminance dans une partie vide est fixée et seulement la luminance dans l'image est modifiable

(30) Priority: 05.07.1999 JP 19099699
(43) Date of publication of application: 10.01.2001
(73) Proprietor: ALPS ELECTRIC CO., LTD., Ota-ku Tokyo 145 (JP)
(72) Inventor: Inage, Fumiaki, Ota-ku, Tokyo 145 (JP); Katsuyama, Tomoyasu, Shinagawa-ku, Tokyo (JP); Date, Yoshihiro, Shinagawa-ku, Tokyo (JP); Hagiwara, Naoki, Shinagawa-ku, Tokyo (JP)
(74) Representative: Kensett, John Hinton

(56) References cited:
- EP-A- 0 520 339
- WO-A-97/42756
- US-A- 4 065 790
- US-A- 4 527 201
- US-A- 4 628 362
- US-A- 4 701 786
- US-A- 5 194 943
- US-A- 5 455 634
- US-A- 5 512 947
- US-A- 6 002 445

## Description

The present invention relates to an image display apparatus.

Generally, image display apparatuses include a function for adjusting the black level, that is, the level at which the luminance is lowest in an image to be displayed on a monitor of these apparatuses. Conventionally, in order to realize this function, a method is used to vary a γ correction voltage in a γ correction circuit. This γ correction corrects the characteristics of gradation (degree of luminance variation) of an image to linear characteristics, and use of this correction also makes it possible to adjust the black level at which the luminance is lowest.

Meanwhile, there is a case in which a blank area is displayed on an image display apparatus such as that described above so that a blanking mark indicating a photographic range of a video camera, etc., is displayed superimposed on an image. This blank area is often displayed at the black level at which the luminance is lowest. It is preferable that the black level of this blank area always be at a predetermined level without being influenced by the luminance of an image to be displayed.

However, if attempts to vary the black level by a method which uses the above-described γ correction circuit are made, since this γ correction circuit is provided immediately before a driver which drives a display means, such as an LCD, and a combined image after the blank area and the image are combined together is corrected, there is a problem in that the luminances of both of the blank area and the image vary at the same time.

A prior art combined video AGC and digitizing circuit is known from US 4,628,362, in which reference voltages are adapted in order to obtain adaptation to the dynamic range of a video signal.

The present invention has been achieved to solve the above-described problem. An object of the present invention is to provide an image display apparatus capable of fixing the luminance of a blank area and varying only the luminance of an image.

To achieve the above-mentioned object, according to the present invention, there is provided an image display apparatus comprising: A/Dconversion means for converting an input analog image signal into digital image data; and black level setting means for setting the black level of the digital image data by adjusting a lower-limit reference voltage of the A/D conversion means, characterised by blank data generation means for generating blank data for displaying a blank area around an image display area on a screen, image data combining means for combining blank data generated by this blank data generation means and digital image data output from said A/D conversion means, display means for displaying the output of this image data combining means on said screen, said black level setting means comprising an illuminance sensor for detecting the illuminance around a video camera which outputs said analog image signal, and said black level setting means being adapted to output a lower-limit reference voltage corresponding to illuminance detected by said illuminance sensor.

According to the image display apparatus of the present invention, the black level of an image display area can be adjusted by the black level setting unit independently of the data of the blank area.

Since a lower-limit reference voltage corresponding to the illuminance detected by the illuminance sensor is output, the automatic setting of the black level can be made complete.

The above and further objects, aspects and novel features of the invention will become more fully apparent from the following detailed description when read in conjunction with the accompanying drawings.

Embodiments of the present invention, will now be described, by way of example, with reference to the accompanying diagrammatic drawings, in which:
Fig. 1 is a schematic diagram of an image display apparatus according to a first example that does not constitute an embodiment of the present invention;
Fig. 2 is a diagram of circuits peripheral to an A/D converter;
Fig. 3 is a diagram showing the relationship between an image display of an LCD and a combined image signal;
Fig. 4 is a timing chart of a video signal; and
Fig. 5 is a schematic diagram of an image display apparatus according to a first embodiment of the present invention.

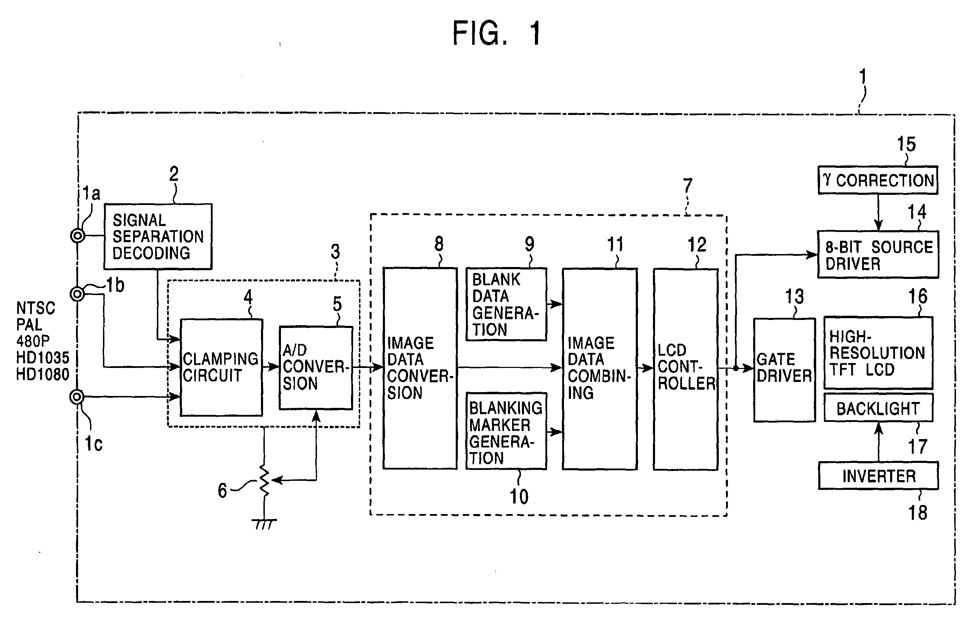

The construction of an image display apparatus 1, which is a programmable logic device (PLD), according to a first example that does not constitute an embodiment of the present invention is described below with reference to Fig. 1. The image display apparatus 1 is provided with input terminals 1a, 1b and 1c for inputting a video signal from the outside. Also, the image display apparatus 1 has contained therein a Y/C separation RGB decoding circuit 2, an A/D converter 3, a variable resistor 6, an image signal processing circuit 7, a gate driver 13, a source driver 14, a γ correction circuit 15, a 6-inch high-resolution TFT LCD 16 having 962 × 562 pixels, a backlight 17, and an inverter 18.

The input terminal 1a is connected to the input terminal of the Y/C separation RGB decoding circuit 2, and the output terminal of the Y/C separation RGB decoding circuit 2 is connected to the input terminal of the A/D converter 3. The input terminals 1b and 1c are connected directly to the input terminal of the A/D converter 3.

The variable resistor 6 has three terminals, a second terminal thereof extending from the middle of the resistor so as to allow variation of the connection point with the resistor. The first and third terminals extend from both ends of the resistor. Therefore, the resistance value between the first terminal and the second terminal, and the resistance value between the second and the third terminal are variable. The second terminal is connected to the input terminal of the A/D converter 3. The first terminal is fixed to an upper-limit reference voltage Vh, and the third terminal is connected to a ground potential.

The output terminal of the A/D converter 3 is connected to the input terminal of the image signal processing circuit 7. The output of this image signal processing circuit 7 is connected to the input terminals of the gate driver 13 and the source driver 14. The output terminal of the γ correction circuit 15 is connected to the input terminal of the source driver 14.

The output terminals of the gate driver 13 and the source driver 14 are connected to the input terminal of the LCD 16 so that each pixel of the LCD 16 is driven. The output terminal of the inverter 18 is connected to the input terminal of the backlight 17, and the inverter 18 drives the backlight 17. The backlight 17, disposed in the back of the LCD 16, emits transmission light which passes through this LCD 16 from the back of the LCD 16 so that this transmission light illuminates the LCD 16.

Referring also to Fig. 1, the internal construction of the A/D converter 3 is described below. The A/D converter 3 has contained therein a clamping circuit 4 and an A/D conversion circuit 5. The three input terminals provided in the A/D converter 3 are connected to the input terminal of the clamping circuit 4, and the output terminal of this clamping circuit 4 is connected to the input terminal of the A/D conversion circuit 5. The output terminal of the A/D conversion circuit 5 is connected to the output terminal of the A/D converter 3. The input terminal of the A/D converter 3, which is connected to the second terminal of the variable resistor 6, is connected to the input terminal of the lower-limit reference voltage of the A/D conversion circuit 5.

Referring also to Fig. 1, the internal construction of the image signal processing circuit 7 is described below. The image signal processing circuit 7 has contained therein an image data conversion circuit 8, a blank data generation circuit 9, a blanking marker generation circuit 10, an image data combining circuit 11, and an LCD controller 12.

The input terminal of the image signal processing circuit 7 is connected to the input terminal of the image data conversion circuit 8. The output terminals of the image data conversion circuit 8, the blank data generation circuit 9, and the blanking marker generation circuit 10 are connected to the input terminal of the image data combining circuit 11. The output terminal of the image data combining circuit 11 is connected to the input terminal of the LCD controller 12, and the output terminal of this LCD controller 12 is connected to the output terminal of the image signal processing circuit 7.

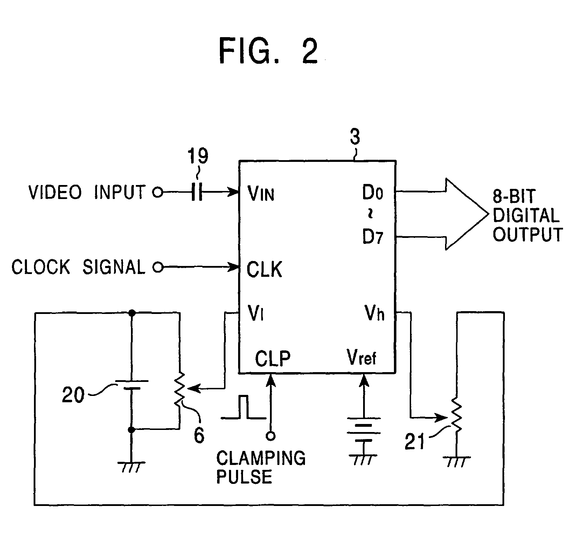

Next, referring to Fig. 2, a detailed circuit construction of the periphery of the A/D converter 3 is described. A video signal from the input terminal of the image display apparatus 1 or from the output terminal of the Y/C separation RGB decoding circuit 2 is input to a terminal Vin of the A/D converter 3 through a capacitor 19. A clock signal is input to a terminal CLK of the A/D converter 3. A clamping pulse is input to a terminal CLP of the A/D converter 3. A clamping voltage is input to a terminal Vref of the A/D converter 3.

A lower-limit reference voltage output from the second terminal of the variable resistor 6, which is connected to a reference voltage source 20 output from the second terminal of the variable resistor 6, is input to the terminal V1 of the A/D converter 3. An upper-limit reference voltage which is output from the reference voltage source 20 through a variable resistor 21 is input to a terminal Vh of the A/D converter 3. The output terminal on the negative side of the reference voltage source 20 is connected to a ground potential. An 8-bit digital signal is output from the output terminals D0 to D7 of the A/D converter 3. This digital signal takes a digital value such that the section between the lower-limit reference voltage and the upper-limit reference voltage is divided evenly by 256, that is, an 8-bit digital value.

Next, referring to Fig. 1, the operation of this example is described. A video signal, which is an analog signal, is input from the input terminals 1a, 1b, or 1c provided in the image display apparatus 1. In a case where a video signal is input from the input terminal 1a, this video signal is input to the A/D converter 3 after passing through the Y/C separation RGB decoding circuit 2. In a case where a video signal is input from the input terminal 1b or 1c, the input video signal is input directly to the A/D converter 3.

The black level, that is, the level at which luminance is lowest, of the video signal which is input to the A/D converter 3 is clamped by the clamping circuit 4 contained in the A/D converter 3. The video signal, whose black level is clamped, is digitized by the A/D conversion circuit 5. The digitized video signal is output from the A/D converter 3 and is input to the image signal processing circuit 7.

The digitized video signal, which is input to the image signal processing circuit 7, is converted into image data by the image data conversion circuit 8 contained in the image signal processing circuit 7, and is input to the image data combining circuit 11. Blank data output from the blank data generation circuit 9 contained also in the image signal processing circuit 7 is also input to the image data combining circuit 11. This blank data contains a signal which specifies a black level in a blank area on the screen.

Furthermore, a blanking marker signal output from the blanking marker generation circuit 10 is also input to the image data combining circuit 11. This blanking marker signal contains a signal which specifies a white level (level at which the luminance is highest) of a boundary line between the image display area of the screen and the blank area thereof. The image data combining circuit 11 combines the image data, the blank data, and the blanking marker signal, and outputs the combined image data to the LCD controller 12.

The LCD controller 12 converts the combined image data into an LCD driving signal and outputs the converted LCD driving signal to the gate driver 13 and the source driver 14. The LCD 16 is driven by the gate driver 13 and the source driver 14, and a combined image formed by the combined image data is displayed on the LCD 16.

The γ correction circuit 15 sends a γ correction voltage to the source driver 14 so that γ correction of the image is performed. Also, the inverter 18 drives the backlight 17 so that this backlight 17 supplies transmission illumination light from the back of the LCD 16.

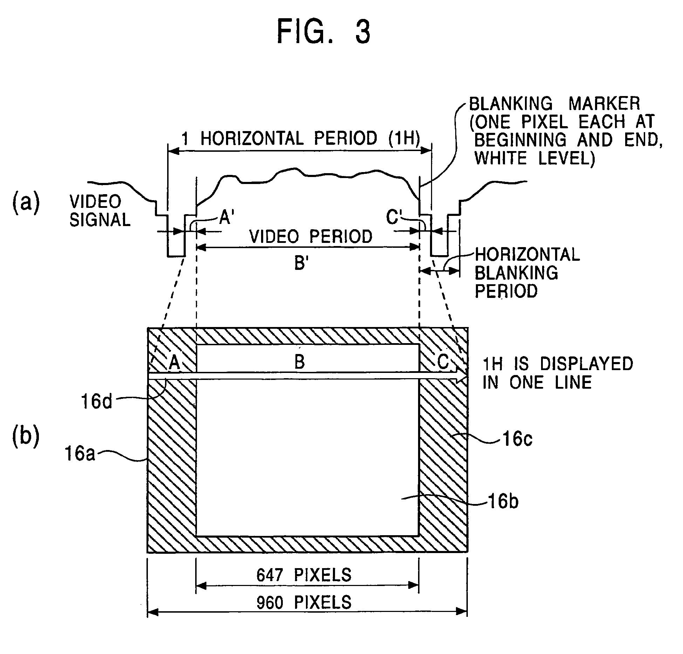

Next, referring to Fig. 3, the relationship between combined image displayed on the screen of the LCD 16 and a combined image data (video signal) is described. A screen 16a of the LCD 16, shown at (b) in Fig. 3, is divided into an image display area 16b and a blank area 16c. In the image display area 16b, an image formed by the video signal input to the image display apparatus 1, that is, an image within the photographic range of a video camera or the like, is displayed. In the blank area 16c, a black level determined in accordance with blank data generated by the blank data generation circuit 9 is displayed.

A waveform of combined image data (video signal) for displaying a particular line 16d in the horizontal direction on the screen 16a is shown at (a) in Fig. 3. In this embodiment, one line in the horizontal direction is composed of 960 pixels, and among them, the number of pixels of the image display area 16b is 647. The blank area 16c is equally provided on the right and left of the image display area 16b. The line 16d is scanned from left to right. The blank area 16c is also equally provided in the upper and lower portions of the image display area 16b.

A first interval A of the line 16d is drawn by an interval A' of a video signal, an interval B is drawn by an interval B', and an interval C is drawn by an interval C'. The signal level of the interval A' and the interval C' is a black level determined in accordance with the blank data generated by the blank data generation circuit 9.

Also, a blanking marker signal is inserted between the interval A' and the interval B' and between the interval B' and the interval C'. These blanking marker signals correspond to one pixel between the interval A and the interval B and between the interval B and the interval C in the line 16d on the screen 16a. Therefore, as a result of scanning by the line 16d being repeated, a white line is displayed vertically between the interval A and the interval B and between the interval B and the interval C on the screen 16a.

The blank areas displayed in the upper and lower portions of the screen 16a are displayed by the line at this position by drawing the black level of the blank area over one horizontal period.

The black level of the blank area 16c differs from the black level of the image display area 16b, each of which is determined by a mutually different signal. That is, the black level of the blank area 16c is determined by the blank data generated by the blank data generation circuit 9, and the black level of the image display area 16b is determined by the lower-limit reference voltage input to the terminal V1 of the A/D converter 3. This lower-limit reference voltage can be adjusted by the variable resistor 6.

Since the blank data generated by the blank data generation circuit 9 does not pass through the A/D converter 3, even if the lower-limit reference voltage is changed, this blank data is not affected by this change. Therefore, even if the lower-limit reference voltage is adjusted by the variable resistor 6 and the black level of the image display area 16b is adjusted, the black level of the blank area 16c does not change.

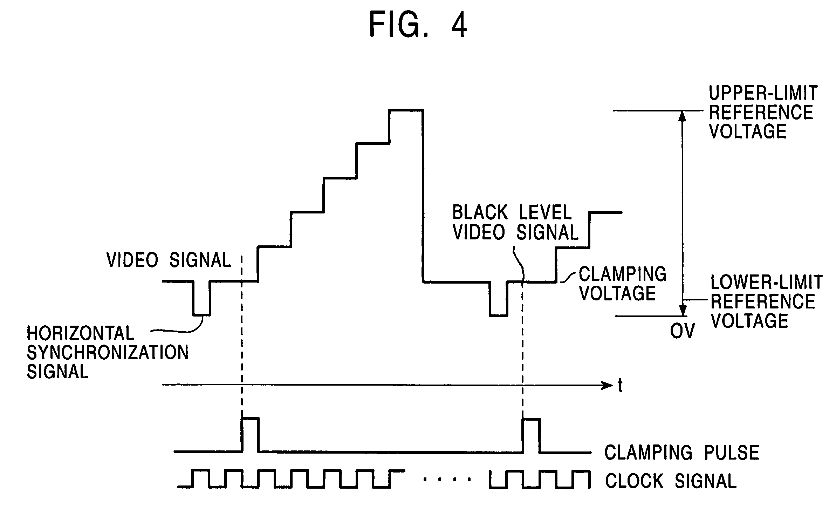

Next, referring to Fig. 4, a sampling operation of a video signal is described. The black level (the level at which the luminance is lowest) of the input video signal is determined by the clamping voltage which has been input to the terminal Vref when a clamping pulse is input to the CLP terminal of the A/D converter 3. The digital signal output from the A/D converter 3 becomes a value determined by the relationship between the clamping voltage and the lower-limit reference voltage input to the terminal V1 of the A/D converter 3. The sampling of the video signal is performed in synchronization with the clock signal input to the terminal CLK of the A/D converter 3.

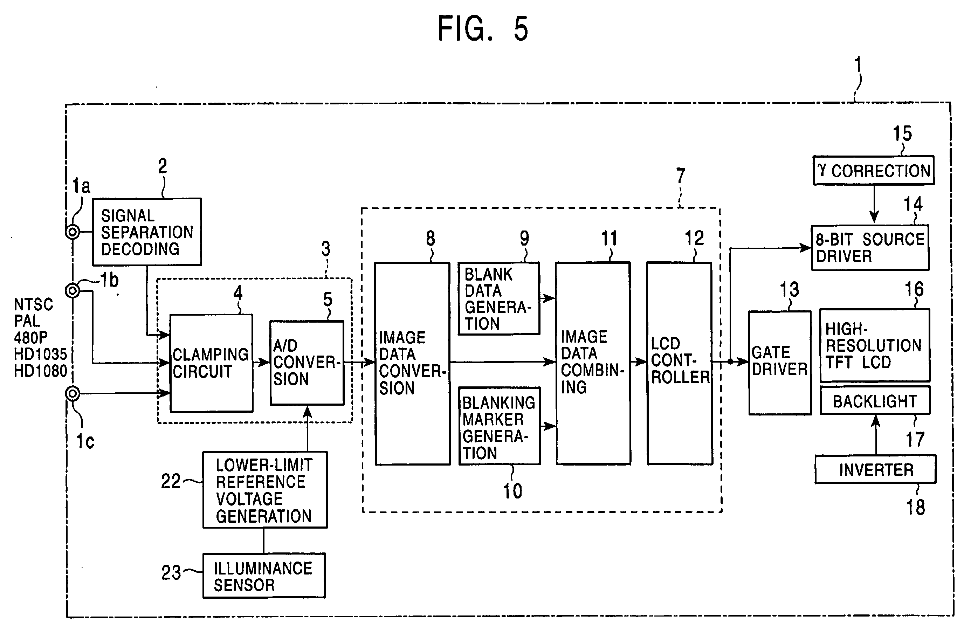

Next, referring to Fig. 5, a first embodiment of the present invention is described. The same components in Fig. 5 as those of the first example, are given the same reference numerals, and accordingly, descriptions thereof are omitted. In the second embodiment, instead of the variable resistor 6 in the first embodiment, an illuminance sensor 23 and a lower-limit reference voltage generation circuit 22 are provided. The illuminance sensor 23 is disposed, for example, near a video camera or the like which outputs a video signal to be input to the image display apparatus 1, and measures the illuminance near this video camera or the like. The output of the illuminance sensor 23 is input to the lower-limit reference voltage generation circuit 22, whereby a lower-limit reference voltage corresponding to this input is output from the lower-limit reference voltage generation circuit 22, and this output is input to the A/D conversion circuit 5 inside the A/D converter 3.

With such a construction, the lower-limit reference voltage automatically changes in accordance with the illuminance around the video camera or the like. Therefore, if the surroundings of the video camera or the like are bright, the lower-limit reference voltage also increases, and the black level of the signal also increases in accordance with this voltage. If, in contrast, the surroundings of the video camera are dark, the lower-limit reference voltage decreases, and the black level of the signal also decreases in accordance with this voltage. However, since the black level of the blank area is determined only by the blank data output from the blank data generation circuit 9, and this blank data does not pass through the A/D conversion circuit 5 to which the lower-limit reference voltage is applied, even if the illuminance of the surroundings of the video camera or the like changes, this change is detected by the illuminance sensor 23, and the lower-limit reference voltage is changed as a result of this detection, the black level of the blank area does not change.

According to the present invention, since the black levels of an image display area and a blank area can be set individually, even if the luminance of an image to be displayed is changed by adjusting the black level of the image display area, the black level of the blank area does not change.

It should be understood that the present invention is not limited to the specific embodiments described in this specification. To the contrary, the present invention is intended to cover various modifications and equivalent arrangements included within the scope of the invention as hereafter claimed. The scope of the following claims is to be accorded the broadest interpretation so as to encompass all such modifications, equivalent structures and functions.

## Claims

1. An image display apparatus (1) comprising:
A/D conversion means (3) for converting an input analog image signal into digital image data; and
black level setting means (22, 23) for setting the black level of the digital image data by adjusting a lower-limit reference voltage of the A/D conversion means,
**characterised by** blank data generation means (9) for generating blank data for displaying a blank area (16c) around an image display area (16b) on a screen (16),
image data combining means (11) for combining blank data generated by this blank data generation means and digital image data output from said A/D conversion means,
display means (12, 13, 14) for displaying the output of this image data combining means on said screen,
said black level setting means (22, 23) comprising an illuminance sensor (23) for detecting the illuminance around a video camera which outputs said analog image signal, and
said black level setting means being adapted to output a lower-limit reference voltage corresponding to illuminance detected by said illuminance sensor.

## Patentansprüche

1. Bildanzeigevorrichtung (1) aufweisend:
eine A/D-Umwandlungseinrichtung (3) zum Umwandeln einer analogen Bildsignaleingabe in digitale Bilddaten; und
eine Schwarzpegelsetzeinrichtung (22, 23) zum Setzen des Schwarzpegels der digitalen Bilddaten durch Anpassen einer Referenzspannung für die untere Grenze der A/D-Umwandlungseinrichtung,
**gekennzeichnet durch** eine Leerdatenerzeugungseinrichtung (9) zum Erzeugen von Leerdaten zum Anzeigen einer leeren Fläche (16c) um eine Bildanzeigefläche (16b) herum auf einem Bildschirm (16),
eine Bilddatenkombinationseinrichtung (11) zum Kombinieren von von der Leerdatenerzeugungseinrichtung erzeugten Leerdaten und von der A/D-Umwandlungseinrichtung ausgegebenen digitalen Bilddaten,
eine Anzeigeeinrichtung (12, 13, 14) zum Anzeigen der Ausgabe der Bilddatenkombinationseinrichtung auf dem Bildschirm,
wobei die Schwarzpegelsetzeinrichtung (22, 23) einen Lichtintensitätssensor (23) aufweist zum Detektieren der Lichtintensität um eine Videokamera herum, welche das analoge Bildsignal ausgibt, und
wobei die Schwarzpegelsetzeinrichtung eingerichtet ist, eine Referenzspannung für die untere Grenze auszugeben, die der von dem Lichtintensitätssensor detektierten Lichtintensität entspricht.

## Revendications

1. Dispositif d'affichage d'images (1) comprenant :
un moyen de conversion analogique/numérique (3) pour convertir un signal image analogique d'entrée en des données image numériques ; et
un moyen de réglage du niveau du noir (22, 23) pour régler le niveau du noir des données image numériques en modifiant une tension de référence de limite inférieure du moyen de conversion analogique/numérique,
**caractérisé par** un moyen de génération de données vides (9) pour générer des données vides pour afficher une zone vide (16c) autour d'une zone d'affichage d'image (16b) sur un écran (16),
un moyen de combinaison de données images (11) pour combiner les données vides générées par ce moyen de génération de données vides et la sortie numérique de données image venant dudit moyen de conversion analogique/numérique,
un moyen d'affichage (12, 13, 14) pour afficher la sortie de ce moyen de combinaison de données image sur ledit écran,
ledit moyen de réglage du niveau du noir (22, 23) comprenant un capteur d'éclairement (23) pour détecter l'éclairement autour d'une caméra vidéo qui fournit ledit signal image, et
ledit moyen de réglage du niveau du noir étant adapté pour fournir une tension de référence de limite inférieure correspondant à l'éclairement détecté par ledit capteur d'éclairement.
